# EUROPEAN PATENT SPECIFICATION

(11) **EP 3 499 006 B1**
(45) Date of publication and mention of the grant of the patent: **03.03.2021**
(21) Application number: 16912703.2
(22) Date of filing: 10.08.2016
(51) Int. Cl.: F02D 11/10, B62J 99/00, F02B 67/06, F02D 9/02, B62J 37/00, B62K 11/10, F01D 11/10, F02M 35/16

(54) **SADDLE-TYPE VEHICLE**
SATTELFAHRZEUG
VÉHICULE DU TYPE À SELLE

(43) Date of publication of application: 19.06.2019
(73) Proprietor: Honda Motor Co., Ltd., Tokyo 107-8556 (JP)
(72) Inventor: NAOI, Yasuo, Wako-shi Saitama 351-0193 (JP)
(74) Representative: Dehns
(86) International application number: PCT/JP2016/073606
(87) International publication number: WO 2018/029822

(56) References cited:
- WO-A1-2015/141749
- WO-A1-2015/141749
- JP-A- 2011 132 895
- JP-A- 2011 132 895
- JP-A- 2011 149 277
- JP-A- 2013 011 209
- JP-A- 2015 117 609
- JP-A- 2015 214 940
- JP-A- 2015 214 940

## Description

### TECHNICAL FIELD

The present invention relates to a saddle-riding type vehicle.

### BACKGROUND ART

In the related art, for example, a saddle-riding type vehicle disclosed in Patent Literature 1 is known. The vehicle includes an engine which has a cylinder portion extending in a forward direction of the vehicle, an intake passage which extends from a rear side of the vehicle to a front side of the vehicle over the cylinder portion and is connected to the cylinder portion, a throttle body which is provided in the intake passage, and a chain tensioner which is disposed on an upper surface of the cylinder portion and has a portion projecting upward. A throttle motor is assembled on the throttle body. The throttle motor is disposed such that a horizontal line passing through a lower end thereof overlaps the chain tensioner and an axis portion thereof deviates from the chain tensioner in the longitudinal direction. WO 2015141749 discloses all the features of the preamble of independent claim 1 and shows a saddle-ride type vehicle comprising a chain tensioner which is disposed on an upper surface of the cylinder portion, and a throttle motor which drives the throttle valve and is disposed above an engine, wherein the throttle motor is disposed to overlap the chain tensioner in a plan view.

### RELATED ART DOCUMENT

### PATENT DOCUMENT

Patent Document 1:International Patent Publication No. 2015-141749

### SUMMARY

### PROBLEMS TO BE SOLVED BY THE INVENTION

However, since it is difficult to lengthen the intake passage, the throttle body may be disposed close to an intake port of the engine. Then, there is a possibility that the throttle motor may interfere with the chain tensioner.

An aspect of the present invention aims to provide a saddle-riding type vehicle in which interference between a throttle motor and engine members can be avoided.

### MEANS FOR SOLVING THE PROBLEM

The present invention provides a saddle-riding type vehicle, comprising an engine which has a cylinder portion extending in a forward direction of the vehicle; an intake passage which extends from a rear side of the vehicle to a front side of the vehicle over the cylinder portion and is connected to the cylinder portion; a throttle valve which is provided in the intake passage, overlaps the cylinder portion in a plan view, and regulates an amount of intake air flowing through the intake passage; an engine member, the engine member being a chain tensioner for adjusting a tension of a timing chain in the engine, which is disposed on an upper surface of the cylinder portion and has a portion projecting upward; a throttle motor which drives the throttle valve and is disposed above the engine and below the intake passage; a speed reduction mechanism which is disposed on one side of the intake passage in a vehicle width direction and connects the throttle motor to the throttle valve so as to transmit power; and a sensor unit which is disposed on the other side of the intake passage in the vehicle width direction and is disposed outside the throttle motor in the vehicle width direction, characterized in that: a space is formed below the sensor unit and on a lateral side of the throttle motor in the vehicle width direction, the chain tensioner is disposed in the space, and the saddle-riding type vehicle further includes a fastening member for fastening the chain tensioner to the upper surface of the cylinder portion; and in that at least a part of the fastening member overlaps the sensor unit in a plan view, and the throttle motor is disposed to avoid overlapping the chain tensioner in a plan view.

An aspect of the present invention is characterized in that the sensor unit overlaps at least a portion of the chain tensioner in a plan view, and at least a portion of the chain tensioner overlaps the throttle motor in a side view.

An aspect of the present invention is characterized in that a throttle body includes a throttle main body including the throttle valve, the reduction mechanism, and the sensor unit, and the throttle motor, wherein the throttle main body is disposed to avoid a most protruding portion of the chain tensioner in a plan view.

An aspect of the present invention is characterized in that the chain tensioner includes a flange portion having an extension in a longitudinal direction of the vehicle, and a virtual straight line extending in the longitudinal direction of the flange portion intersects the axis line of the throttle motor within a width in the vehicle width direction of the cylinder portion in a plan view.

An aspect of the present invention is characterized by further including a plurality of fastening members for fastening the flange portion to the upper surface of the cylinder portion, in which at least a portion of the plurality of fastening members is the most protruding portion of the chain tensioner.

An aspect of the present invention is characterized in that the flange portion is coupled to the upper surface of the cylinder portion via two fastening members, a line which passes through the center of the chain tensioner and which is parallel to the center axis of the engine extending in the longitudinal direction of the vehicle is defined as a virtual center line in a plan view, and a virtual straight line passing through the two fastening members forms an acute angle with respect to the virtual center line in a plan view.

### ADVANTAGE OF THE INVENTOPN

According to the aspects of the present invention, interference between the throttle motor and the engine member can be avoided.

### BRIEF DESCRIPTION OF THE DRAWINGS

FIG. 1 is a left side view of a motorcycle according to an embodiment.
FIG. 2 is a right side view of a rear portion of the motorcycle according to the embodiment with components such as a vehicle body cover or the like removed.
FIG. 3 is a top view of a center portion of the motorcycle in a longitudinal direction according to the embodiment with components such as a seat or the like removed.
FIG. 4 is a right side view of a swing unit according to the embodiment.
FIG. 5 is a top view of the swing unit according to the embodiment.
FIG. 6 is a top view of a cylinder portion according to the embodiment.
FIG. 7 is a cross-sectional view taken along a line VII-VII of FIG. 3.
FIG. 8 is a diagram showing a sensor as another example of an engine member.

### DESCRIPTION OF THE EMBODIMENT

Hereinafter, embodiments of the present invention will be described with reference to the drawings. In the following description, directions such as forward, backward, left, and right are the same as those in a vehicle described below unless otherwise noted. Arrows FR indicating a front of the vehicle, arrows LH indicating a left side of the vehicle, and arrows UP indicating an upper side of the vehicle are shown at appropriate positions in the drawings used in the following description.

### <Entire vehicle>

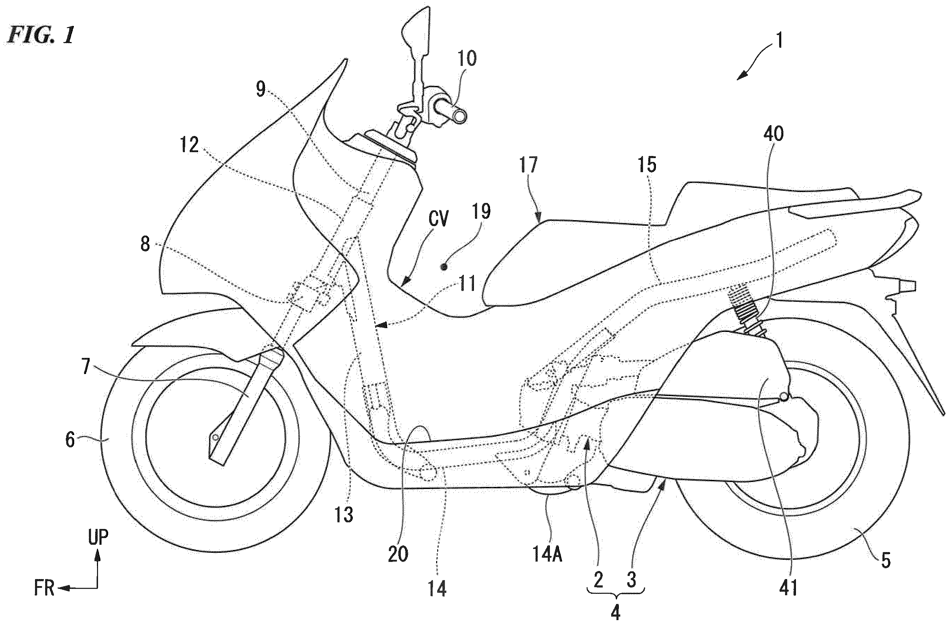

FIG. 1 shows a scooter type motorcycle 1 as an example of a saddle-riding type vehicle. Referring to FIG. 1, the motorcycle 1 includes a front wheel 6 steered by a handlebar 10 and a rear wheel 5 driven by a swing unit 4 including an engine 2. Hereinafter, the motorcycle 1 may be simply referred to as a "vehicle."

Steering system components including the handlebar 10 and the front wheel 6 are steerably supported by a head pipe 12 at a front end of a vehicle body frame 11. A lower portion of a front portion of the swing unit 4 is vertically swingably supported via a link member 14A on a lower rear side of the vehicle body frame 11.

The vehicle body frame 11 is formed by integrally joining steel material pieces of a plurality of types by welding or the like. The vehicle body frame 11 includes the head pipe 12 which rotatably supports a steering shaft 9, a down frame 13 which extends obliquely downward in a rearward direction from the head pipe 12, a pair of left and right side frames 14 which are connected to left and right side surfaces of a lower edge of the down frame 13 while extending obliquely upward in the rearward direction, and a pair of left and right seat frames 15 which are connected to upper ends of rear portions of the left and right side frames 14 and are inclined more gently than the rear portions of the left and right side frames 14 to extend obliquely upward in the rearward direction.

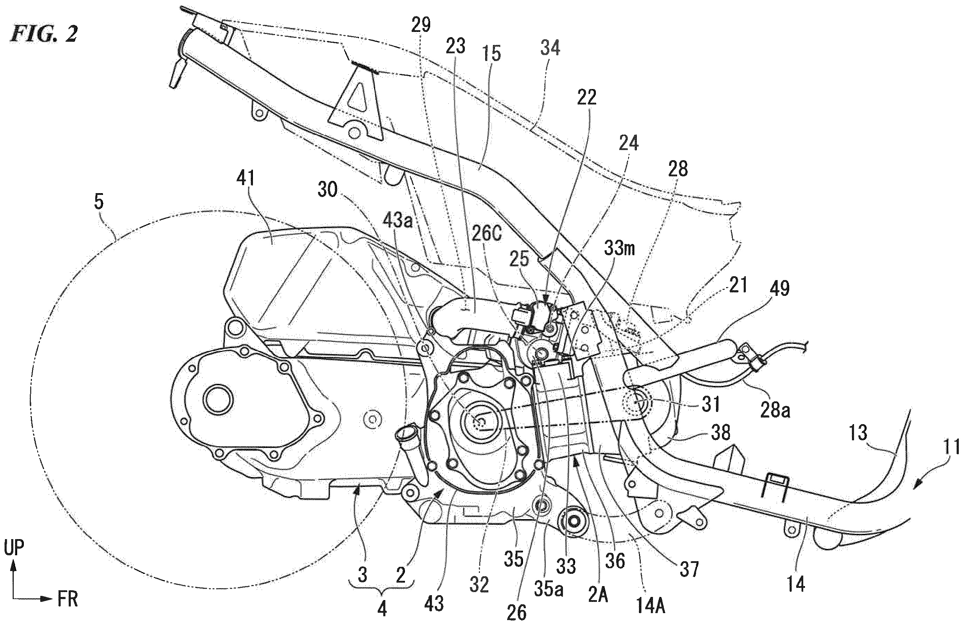

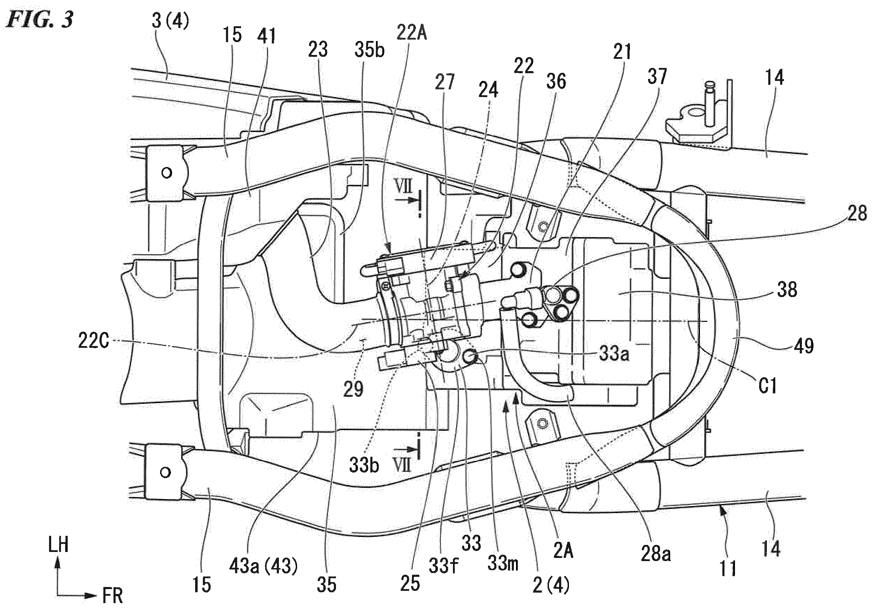

As shown in FIG. 2, a cross frame 49, which is inclined obliquely upward in a forward direction while being curved in an arc shape projecting forward in the plan view of FIG. 3 and interconnects the left and right side frames 14, is coupled to the rear upper end portions of the left and right side frames 14. As shown in FIG. 2, front end portions of the right and left seat frames 15 extend forward beyond portions thereof connected to the left and right side frames 14, and extended ends at a front side thereof are connected to middle portions of the cross frame 49.

As shown in FIG. 1, the handlebar 10 is supported on an upper end of the steering shaft 9 via a handlebar holder. The steering shaft 9 is inserted through the head pipe 12 and a lower end thereof is exposed from the head pipe 12. A bridge member 8 extending in a vehicle width direction is provided at the lower end of the steering shaft 9. Front forks 7 are provided to the left and right of the bridge member 8. A front wheel 6 is rotatably supported between lower portions of the left and right front forks 7.

As shown in FIG. 2, a storage box 34 capable of storing articles such as helmets is disposed between the right and left seat frames 15. The storage box 34 is mounted on the left and right seat frames 15 with an opening facing upward. On an upper portion of the storage box 34, an elongated sheet 17 (see FIG. 1) which also serves as a lid of the storage box 34 is mounted to be pivotable about a front end thereof as a pivot point.

As shown in FIG. 1, a leg through space 19 which is recessed downward in a concave shape on a vehicle body cover CV is provided between the head pipe 12 and a front end portion of the seat 17. The leg through space 19 is a space through which legs pass when a driver gets on and off the motorcycle 1. Step floors 20 on which feet of a driver seated on the seat 17 may be placed are provided below the right and left sides of the leg through space 19. The step floors 20 are disposed above the left and right side frames 14 of the vehicle body frame 11. As a result, a footrest load is supported by the left and right side frames 14.

The swing unit 4 is supported at a center portion of the vehicle body frame 11. The swing unit 4 is a swing type power unit in which the engine 2 and power transmission device 3 are integrally formed. The engine 2 is disposed in a front side of the swing unit 4. The power transmission device 3 is connected to a rear side of a left side portion of the engine 2. A support portion of the rear wheel 5 is provided at a rear end portion of the power transmission device 3. An air cleaner 41 included in an intake system of the engine 2 is provided on an upper portion of the power transmission device 3. A cushion unit 40 is interposed between a rear end portion of the swing unit 4 and the vehicle body frame 11.

### <Engine>

As shown in FIG. 2, the engine 2 includes a cylinder portion 2A extending in a forward direction of the vehicle, and a crankcase 35 coupled to a rear end of the cylinder portion 2A. The cylinder portion 2A includes a cylinder block 36 in which a piston (not shown) is slidably accommodated, a cylinder head 37 which is coupled to a front end of the cylinder block 36 to form a combustion chamber (not shown) between the cylinder block 36 and the cylinder head 37, and a head cover 38 which is attached to the cylinder head 37 and accommodates a valve operating mechanism of intake valves and exhaust valves between the head cover 38 and the cylinder head 37.

A crankshaft 30 which converts a forward and backward motion of the piston into a rotational motion and outputs the motion is accommodated in the crankcase 35. Thus, a left end portion of the crankshaft 30 can transmit power to an input portion of the power transmission device 3.

In the valve operating mechanism of the engine 2, a camshaft 31 that is linked to engine rotation (rotation of the crankshaft 30) is supported by the cylinder head 37, and the intake valves and the exhaust valves are opened and closed at predetermined timings by cams (not shown) provided on the camshaft 31.

The cylinder portion 2A protrudes in the forward direction of the vehicle while slightly inclining upward from the crankcase 35. A pair of support pieces 35a protruding in the forward direction of the vehicle extends at a front end portion on a lower side of the crankcase 35. The support pieces 35a are disposed at two locations separated from each other in the vehicle width direction of the crankcase 35. A link member 14A has one end portion which is connected to the left and right side frames 14 and the other end portion which is rotatably connected to the pair of support pieces 35a.

In a state in which the swing unit 4 is attached to the vehicle body frame 11 via the link member 14A, portions of the head cover 38 and the cylinder head 37 of the engine 2 protrude in the forward direction of the vehicle body from between rising portions on rear end sides of the left and right side frames 14. As shown in FIG. 3, the portions of the head cover 38 and the cylinder head 37 which project from between the rising portions on the rear end side of the left and right side frames 14 are disposed in a space surrounded by front end portions of the left and right seat frames 15 and the cross frame 49.

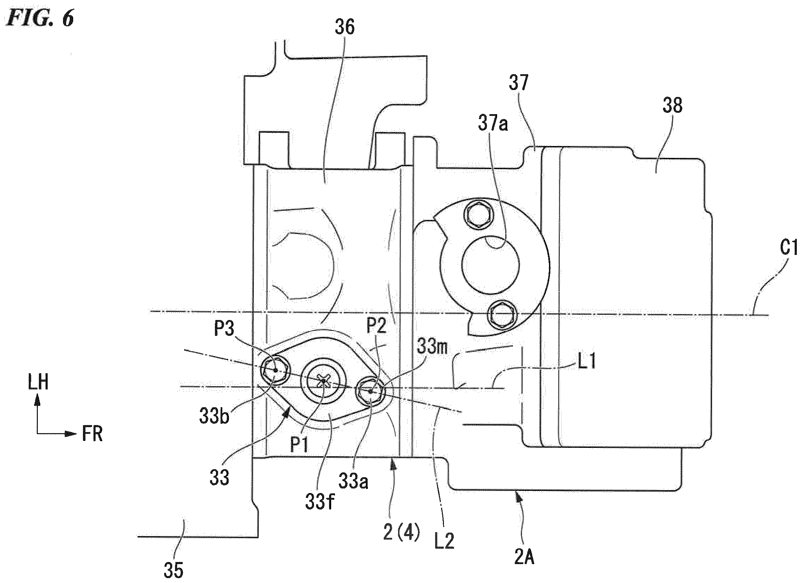

An intake port 37a (see FIG. 6) is provided on an upper surface side of the cylinder head 37. An exhaust port (not shown) is provided on a lower surface side of the cylinder head 37. A front end portion of an inlet pipe 21 is connected to the intake port 37a. A connecting tube 23 is connected to a rear end side of the inlet pipe 21 via a throttle body 22. A front end portion of an exhaust pipe (not shown) is connected to an exhaust port. A rear end portion of the exhaust pipe extends from a lower side of the swing unit 4 to the rear side of the vehicle body and is connected to a muffler (not shown).

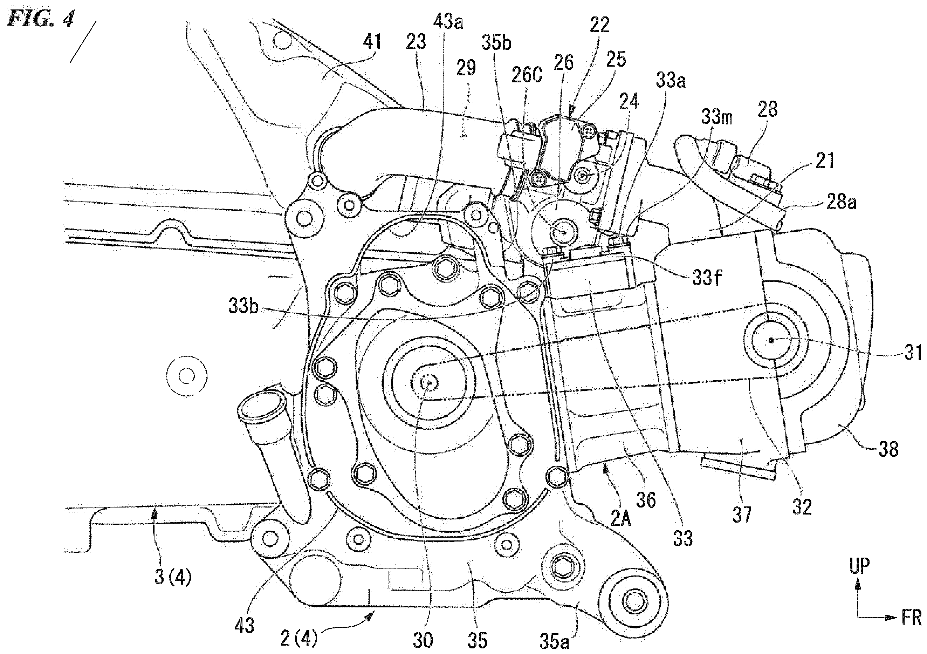

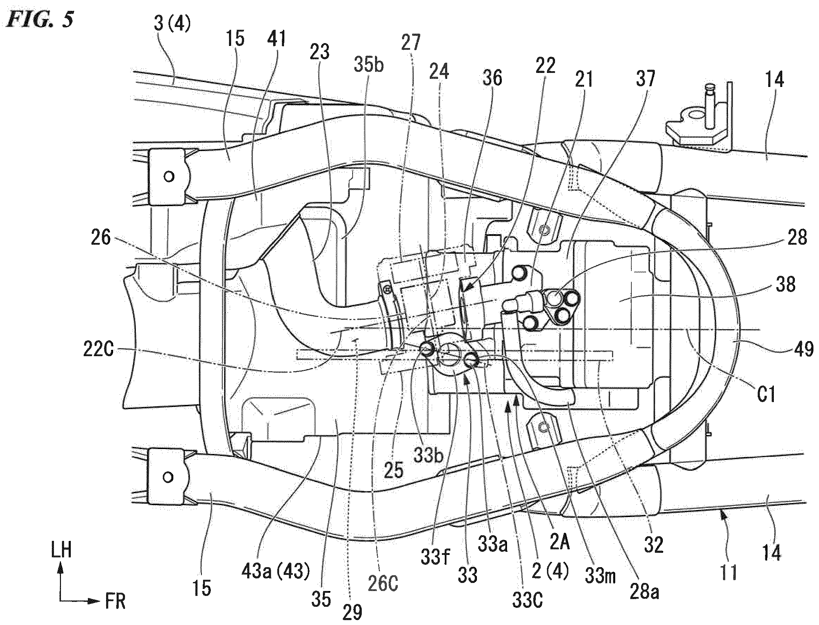

As shown in FIG. 4, the crank shaft 30 in the crankcase 35 and the camshaft 31 of the cylinder head 37 are interlockingly linked with each other by a timing chain 32 inside the engine 2. Specifically, a sprocket (not shown) is attached to each of the crankshaft 30 and the camshaft 31, with a timing chain 32 wrapped around both sprockets. In the plan view of FIG. 5, the timing chain 32 is disposed at a position biased to the right side in the vehicle width direction across a center line C1 in the vehicle width direction of the cylinder block 36 (hereinafter referred to as "cylinder block axis C1"). The cylinder block axis C1 corresponds to a center axis of the engine 2 extending in a longitudinal direction of the vehicle.

Also, a radiator (not shown) for cooling engine cooling water is attached to a right end portion of the crankcase 35 of the engine 2. Reference numeral 43 in the figure is a radiator base integrally provided on the crankcase 35 for attaching the radiator. An upper portion of the radiator base 43 protrudes upward from an upper surface of a general portion of the crankcase 35. At the upper portion of the radiator base 43, a discharge air outlet 43a for discharging the air cooled by the radiator to a rear side of the vehicle through an upper side of a general surface of the crankcase 35 is provided.

### <Intake passage>

As shown in FIG. 4, an intake passage 29 extends from a rear side of the vehicle toward a front side of the vehicle above the cylinder portion 2A and is connected to the cylinder head 37 of the cylinder portion 2A. The intake passage 29 is an internal passage of the inlet pipe 21, the throttle body 22 and the connecting tube 23.

In the side view of FIG. 4, the inlet pipe 21 gently slants downward in the forward direction from above the cylinder block 36 toward an upper side of the cylinder head 37 and is sharply curved downward near an upper portion of the intake port 37a (see FIG. 6) on an upper surface of the cylinder head 37 to be connected to the intake port 37a. In the top view of FIG. 3, a front end portion of the inlet pipe 21 is connected to the intake port 37a at a position biased to a left side in the vehicle width direction across the cylinder block axis C1 on the upper surface of the cylinder head 37.

As shown in FIG. 4, in the vicinity of a connecting portion between the inlet pipe 21 and the cylinder head 37, a fuel injection valve 28 for injecting fuel into the intake passage 29 in response to a control signal from a control device is provided. Also, in the figure, reference numeral 28a is a fuel supply pipe connected to the fuel injection valve 28.

As shown in FIG. 4, the throttle body 22 is connected to a rear end portion of the inlet pipe 21. The throttle body 22 is disposed to extend over upper surfaces of the cylinder block 36 and the crankcase 35. In the top view of FIG. 3, internal passages of the inlet pipe 21 and the throttle body 22 are inclined rightward in the rearward direction from the portion connecting to the cylinder head 37 on a front end side of the inlet pipe 21 across the cylinder block axis C1. That is, an axis 22C (hereinafter referred to as "throttle body axis 22C") of the internal passage of the throttle body 22 in the intake passage 29 is inclined to the right in a rearward direction in the top view of FIG. 3.

The connecting tube 23 is connected to a rear end portion of the throttle body 22. The connecting tube 23 passes above the upper surface of the crankcase 35 and is connected to the air cleaner 41.

A front end of the connecting tube 23 is connected in a substantially horizontally meandering manner to the rear end portion of the throttle body 22 in which the throttle body axis 22C is inclined to the right in a rearward direction at a position on the right side of the cylinder block axis C1. That is, in the top view of FIG. 3, the extent to which the connecting tube 23 meanders in the vehicle width direction is greater than a displacement amount of in the vehicle width direction between the connecting portion on the air cleaner 41 side and the connecting portion on the throttle body 22 side.

### <Throttle body>

As shown in FIG. 3, the throttle body 22 includes a throttle main body 22A having a throttle valve 24 (only a rotational axis of the throttle valve is shown in the figure), a speed reduction mechanism 27 and a sensor unit 25, and a throttle motor 26 for rotating the throttle valve 24 (See FIG. 4).

In the plan view of FIG. 3, the throttle main body 22A is disposed to avoid a most protruding portion 33m of a chain tensioner 33.

The throttle valve 24 is provided in the intake passage 29. The throttle valve 24 is a valve that regulates an amount of intake air (intake air amount) flowing through the intake passage 29 by opening and closing the intake passage 29. In the top view of FIG. 3, the throttle valve 24 overlaps the upper surface of the cylinder block 36 in the cylinder portion 2A. In the top view of FIG. 3, a rotation axis of the throttle valve 24 is substantially orthogonal to the throttle body axis 22C. In the top view of FIG. 3, the throttle valve 24 is disposed behind the most protruding portion 33m of the chain tensioner 33.

The speed reduction mechanism 27 connects the throttle motor 26 to the throttle valve 24 to be able to transmit power. The speed reduction mechanism 27 decelerates the rotation of the throttle motor 26 and transmits power to the throttle valve 24. The speed reduction mechanism 27 is disposed on a left side of the intake passage 29 in the vehicle width direction. Specifically, in the top view of FIG. 3, the speed reduction mechanism 27 is disposed at a position biased toward the left side in the vehicle width direction across the throttle body axis 22C. In the top view of FIG. 3, the speed reduction mechanism 27 is disposed on the opposite side in the vehicle width direction from the most protruding portion 33m of the chain tensioner 33 across the throttle body axis 22C. An opening sensor (throttle position sensor (TPS)) for detecting an opening degree of the throttle valve 24 is provided on the speed reduction mechanism 27 side.

An opening degree signal of the throttle valve 24 detected by the opening degree sensor is inputted to a signal input portion of the control device (not shown) which drives and controls the throttle motor 26. The control device receives an operation signal of a throttle operator (not shown) provided in the handlebar 10, the opening degree signal from the opening degree sensor, and various other signals, and drives and controls the throttle motor 26 so as to adjust an intake opening degree of the throttle valve 24 to an appropriate opening degree.

The sensor unit 25 is disposed on a right side of the intake passage 29 in the vehicle width direction. The sensor unit 25 is disposed outside the throttle motor 26 in the vehicle width direction. In the top view of FIG. 3, the sensor unit 25 overlaps a rear portion of the chain tensioner 33. In the sensor unit 25, an intake air temperature sensor (TA sensor) for detecting an intake air temperature and a negative pressure sensor (PB sensor) for detecting a negative pressure in the intake passage 29 are provided.

As shown in FIG. 4, the throttle motor 26 is integrally assembled on the throttle body 22. In the right side view of FIG. 4, the throttle motor 26 is disposed above the engine 2 and below the intake passage 29. Specifically, in the right side view of FIG. 4, the throttle motor 26 is disposed between an upper surface of the engine 2 and the internal passage of the throttle body 22. Further, in the top view of FIG. 5, the throttle motor 26 is disposed to avoid the chain tensioner 33. In the right side view of FIG. 4, the throttle motor 26 is disposed in front of a front wall 35b which rises upward from the upper surface of the crankcase 35.

In the right side view of FIG. 4, an axis 26C of the throttle motor 26 (hereinafter referred to as "motor axis 26C") is disposed at a position biased downward in the rearward direction below the rotation axis of the throttle valve 24. In the top view of FIG. 5, the motor axis 26C is substantially orthogonal to the throttle body axis 22C. That is, in the top view of FIG. 5, the motor axis 26C is substantially parallel to the rotation axis of the throttle valve 24.

### <Chain tensioner (engine member)>

As shown in FIG. 5, a chain tensioner 33 (engine member) a portion of which protrudes upward is disposed on the upper surface of the cylinder block 36 in the cylinder portion 2A. The chain tensioner 33 is a member for adjusting a tension of the timing chain 32 in the engine 2.

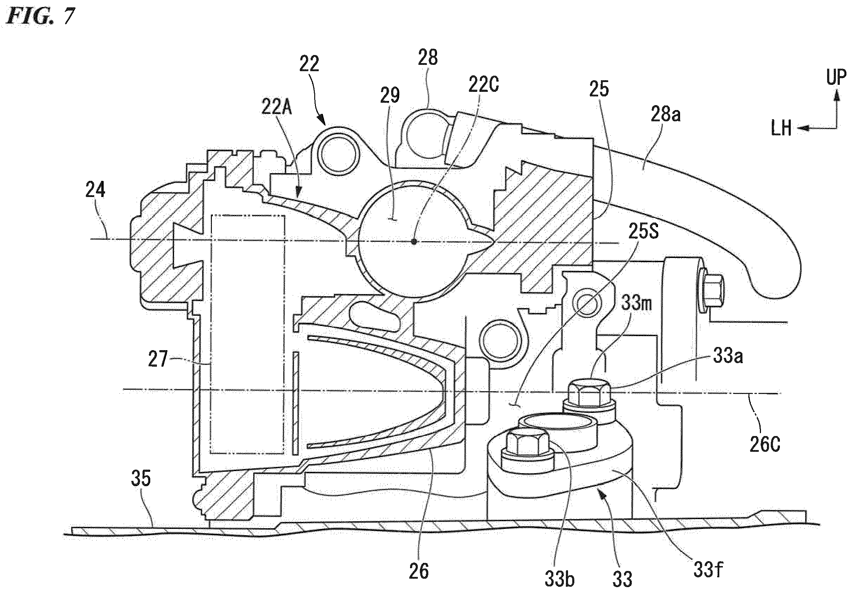

As shown in FIG. 7, the chain tensioner 33 is disposed in a space 25S below the sensor unit 25 and on a right side of the throttle motor 26 in the vehicle width direction. In the right side view of FIG. 4, a rear upper portion of the chain tensioner 33 overlaps the throttle motor 26.

The chain tensioner 33 is provided at a position above a passage trajectory of the timing chain 32 on an upper wall of the cylinder block 36. In the right side view of FIG. 4, a portion of the chain tensioner 33 protrudes upward from the upper surface of the cylinder block 36. For example, by manipulating a protruding portion of the chain tensioner 33 with a tool or the like, the tension of the timing chain 32 can be adjusted from the outside of the engine 2. In the top view of FIG. 5, the most protruding portion 33m of the chain tensioner 33 in an upward direction is positioned at a front upper end portion of the chain tensioner 33.

The chain tensioner 33 is fastened to the upper surface of the cylinder block 36 using a plurality of (for example, two in this embodiment) fastening members 33a and 33b. The fastening members 33a and 33b include a first fastening member 33a and a second fastening member 33b disposed on a side behind the first fastening member 33a.

A front upper end portion of the first fastening member 33a is the most protruding portion 33m of the chain tensioner 33. In the top view of FIG. 3, the first fastening member 33a is disposed to avoid the sensor unit 25. In the top view of FIG. 3, a portion of the second fastening member 33b overlaps the sensor unit 25.

The chain tensioner 33 includes a flange portion 33f having an extension in the longitudinal direction of the vehicle. Specifically, in the top view of FIG. 5, the flange portion 33f is slightly inclined such that a front side thereof is positioned further to the right side in the vehicle width direction. In the top view of FIG. 5, a virtual straight line 33C extending in the longitudinal direction of the flange portion 33f (hereinafter referred to as "flange axis 33C") intersects the motor axis 26C within a width of the cylinder portion 2A in the vehicle width direction.

The flange portion 33f is coupled to the upper surface of the cylinder block 36 via the two fastening members 33a and 33b. In the top view of FIG. 6, a line passing through the center P1 of the chain tensioner 33 and parallel to the cylinder block axis C1 is a virtual center line L1. In the top view of FIG. 6, a virtual straight line L2 passing through the two fastening members 33a and 33b (specifically, a center P2 of the first fastening member 33a and a center P3 of the second fastening member 33b) forms an acute angle with respect to the virtual center line L1.

As explained above, the above embodiment includes the engine 2 which has the cylinder portion 2A extending in the forward direction of the vehicle, the intake passage 29 which extends from the rear side of the vehicle to the front side of the vehicle above the cylinder portion 2A and is connected to the cylinder portion 2A, the throttle valve 24 which is provided in the intake passage 29, overlaps the cylinder portion 2A in a plan view, and regulates the amount of intake air flowing through the intake passage 29, the chain tensioner 33 which is disposed on the upper surface of the cylinder portion 2A and a portion of which protrudes upward, and the throttle motor 26 which drives the throttle valve 24 and is disposed above the engine 2 below the intake passage 29 to avoid the chain tensioner 33 in the plan view.

According to the present embodiment, since the throttle motor 26 is disposed to avoid the chain tensioner 33 in the plan view, interference between the throttle motor 26 and the chain tensioner 33 can be avoided. In addition, compared with a case where the throttle motor 26 overlaps the chain tensioner 33 in the plan view, it is possible to reduce a height of the intake passage 29. Therefore, a capacity of the storage box 34 can be secured. That is, a degree of freedom of a layout for functional components around the engine 2 such as the storage box 34 or the like can be increased.

Since the space 25S is formed below the sensor unit 25 and on a lateral side of the throttle motor 26 in the vehicle width direction and the chain tensioner 33 is disposed in the space 25S, it is possible to efficiently ensure a space for disposing the chain tensioner 33. Therefore, interference between the throttle motor 26 and the chain tensioner 33 can be reliably avoided.

In the plan view, the sensor unit 25 overlaps at least a portion of the chain tensioner 33. In the side view, at least a portion of the chain tensioner 33 overlaps the throttle motor 26. Thus, the chain tensioner 33 can be disposed efficiently in the space 25S, so that interference between the throttle motor 26 and the chain tensioner 33 can be reliably avoided.

Since the throttle main body 22A is disposed to avoid the most protruding portion 33m of the chain tensioner 33 in the plan view, it is possible to more reliably avoid interference between the throttle motor 26 and the chain tensioner 33. In addition, since the height of the intake passage 29 can be made as low as possible, the capacity of the storage box 34 can be maximally secured.

Since at least a portion of the fastening member 33b overlaps the sensor unit 25 in the plan view, the fastening member 33b can be disposed efficiently in the space 25S below the sensor unit 25. Accordingly, it is possible to more reliably avoid interference between the throttle motor 26 and the fastening member 33b.

Since the flange axis 33C intersects the motor axis 26C within the width of the cylinder portion 2A in the vehicle width direction in the plan view, it is possible to more reliably avoid interference between the throttle motor 26 and the flange portion 33f as compared with the case where the longitudinal direction of the flange portion of the chain tensioner is oriented in the vehicle width direction. In addition, since the height of the intake passage 29 can be further reduced, the capacity of the storage box 34 can be sufficiently secured.

Since the virtual straight line L2 passing through the two fastening members 33a and 33b in the plan view forms an acute angle with respect to the virtual center line L1, the two fastening members 33a and 33b can be disposed within the width of the cylinder portion 2A when the chain tensioner 33 is coupled to the upper surface of the cylinder portion 2A. Thus, disposition positions of the fastening members 33a and 33b can be formed only in the cylinder portion 2A without being formed in the crankcase 35. That is, it is unnecessary to form attachment holes for the fastening members 33a and 33b in each of the cylinder portion 2A and the crankcase 35, and forming only in the cylinder portion 2A suffices. Therefore, the attaching structure of the fastening members 33a and 33b can be simplified.

In the above embodiment, although the opening degree sensor is provided on the speed reduction mechanism 27 side, and the intake air temperature sensor and the negative pressure sensor are provided in the sensor unit 25, the present invention is not limited thereto. For example, the intake air temperature sensor and the negative pressure sensor may be provided on the speed reduction mechanism 27 side, and the opening degree sensor may be provided in the sensor unit 25. In other words, the sensor unit 25 may be provided with any of the opening sensor, the intake air temperature sensor, and the negative pressure sensor, and installation positions of the various sensors are not particularly limited.

In the above embodiment, although an example in which a portion of the fastening member 33a is the most protruding portion 33m has been described, the present invention is not limited thereto. For example, a portion other than the fastening member (on a main body of the chain tensioner 33) may be the most protruding portion.

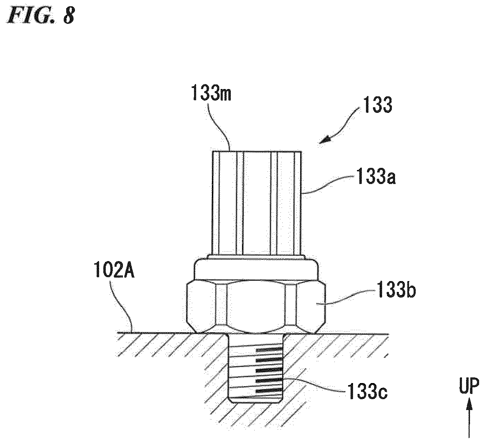

In the above embodiment, although an example in which the engine member is a chain tensioner has been described, the present invention is not limited to this. For example, as shown in FIG. 8, the engine member may be a sensor 133 having a coupler portion 133a. For example, the sensor 133 is a knock sensor or an oil sensor.

The sensor 133 includes the coupler portion 133a protruding upward, a lock nut portion 133b having a hexagonal shape in a plan view, and a male screw portion 133c formed as a male screw. The upper end portion of the coupler portion 133a is a most protruding portion 133m of the sensor 133. The sensor 133 is coupled to an upper surface of a cylinder portion 102A at one point via the male screw portion 133c.

In the above-described embodiment, although an example in which the engine 2 includes the cylinder portion 2A which extends in the forward direction of the vehicle has been described, the present invention is not limited thereto. For example, the engine may have a cylinder portion extending upward, and the extending direction of the cylinder portion is not particularly limited. That is, the motorcycle may include an engine which has a cylinder portion extending in one direction; an intake passage which extends in the one direction on a lateral side of the cylinder portion and is connected to the cylinder portion; a throttle valve which is provided in the intake passage and regulates an amount of intake air flowing through the intake passage; an engine member which is disposed on a surface on an intake passage side in the cylinder portion and has a portion projecting toward the intake passage; and a throttle motor which drives the throttle valve and is disposed between the engine and the intake passage in a direction in which the engine and the intake passage are parallel so as to avoid the engine member.

The present invention is not limited to the above embodiment, and the above-mentioned saddle-riding type vehicle includes all vehicles in which a driver rides across a vehicle body. Not only motorcycles (including motorized bicycles and scooter type vehicles) but also three-wheeled (including two front wheels and one following wheel as well as one front wheel and two rear wheels) and also four-wheeled vehicles are included.

Also, the configuration according to the above embodiment is an example of the present invention, and various modifications are possible within the scope of the appended claims.

### BRIEF DESCRIPTION OF THE REFERENCE SYMBOLS

1 Motorcycle (saddle-riding type vehicle)
2 Engine
2A Cylinder portion
22 Throttle body
22A Throttle main body
24 Throttle valve
25 Sensor unit
25S Space
26 Throttle motor
26C Motor axis (axis of throttle motor)
27 Reduction mechanism
29 Intake passage
32 Timing Chain
33 Chain Tensioner (engine member)
33a First fastening member (fastening member)
33b Second fastening member (fastening member)
33f Flange portion
33m Most protruding portion
33C Flange axis (virtual straight line extending in the longitudinal direction of the flange portion)
133 Sensor (engine member)
133a Coupler portion
133m Most protruding portion
C1 Cylinder block axis (center axis of engine)
L1 Virtual center line
L2 Virtual line passing through the two fastening members in a plan view
P1 Center of chain tensioner

## Claims

1. A saddle-riding type vehicle, comprising:
an engine (2) which has a cylinder portion (2A) extending in a forward direction of the vehicle;
an intake passage (29) which extends from a rear side of the vehicle to a front side of the vehicle over the cylinder portion (2A) and is connected to the cylinder portion (2A);
a throttle valve (24) which is provided in the intake passage (29), overlaps the cylinder portion (2A) in a plan view, and regulates an amount of intake air flowing through the intake passage (29);
an engine member, the engine member being a chain tensioner (33) for adjusting a tension of a timing chain in the engine (2), which is disposed on an upper surface of the cylinder portion (2A) and has a portion projecting upward;
a throttle motor (26) which drives the throttle valve (24) and is disposed above the engine (2) and below the intake passage (29);
a speed reduction mechanism (27) which is disposed on one side of the intake passage (29) in a vehicle width direction and connects the throttle motor (26) to the throttle valve (24) so as to transmit power; and
a sensor unit (25) which is disposed on the other side of the intake passage (29) in the vehicle width direction and is disposed outside the throttle motor (26) in the vehicle width direction,
**characterized in that**:
a space (25S) is formed below the sensor unit (25) and on a lateral side of the throttle motor (26) in the vehicle width direction,
the chain tensioner (33) is disposed in the space (25S),
the saddle-riding type vehicle further includes a fastening member (33a) for fastening the chain tensioner (33) to the upper surface of the cylinder portion (2A); and **in that**
at least a part of the fastening member (33a) overlaps the sensor unit (25) in a plan view; and
the throttle motor (26) is disposed to avoid overlapping the chain tensioner (33) in a plan view.

2. A saddle-riding type vehicle according to claim 1,
wherein the sensor unit (25) overlaps at least a portion of the chain tensioner (33) in a plan view, and
at least a portion of the chain tensioner (33) overlaps the throttle motor (26) in a side view.

3. A saddle-riding type vehicle according to claim 1 or 2,
wherein a throttle body (22) includes a throttle main body (22A) including the throttle valve (24), the reduction mechanism (27), and the sensor unit (25), and the throttle motor (26),
wherein the throttle main body (22A) is disposed to avoid a most protruding portion of the chain tensioner (33) in a plan view.

4. A saddle-riding type vehicle according to any one of claims 1 to 3,
wherein the chain tensioner (33) includes a flange portion (33f) having an extension in a longitudinal direction of the vehicle, and
a virtual straight line extending in the longitudinal direction of the flange portion intersects the axis line of the throttle motor within a width in the vehicle width direction of the cylinder portion in a plan view, and further comprising
a plurality of fastening members (33a) for fastening the flange portion (33f) to the upper surface of the cylinder portion (2A),
wherein at least a part of the plurality of fastening members (33a) is a most protruding portion (33m) of the chain tensioner (33).

5. A saddle-riding type vehicle according to claim 4,
wherein the flange portion (33f) is coupled to the upper surface of the cylinder portion (2A) via two fastening members (33a),
a line which passes through the center (P1) of the chain tensioner (33) and is parallel to the center axis (C1) of the engine (2) extending in the longitudinal direction of the vehicle is defined as a virtual center line (L1) in a plan view, and
a virtual straight line (L1) passing through the two fastening members (33a) forms an acute angle with respect to the virtual center line (L1) in a plan view.

## Patentansprüche

1. Fahrzeug vom Satteltyp, umfassend:
einen Motor (2), der einen Zylinderbereich (2A) aufweist, der sich in einer Vorwärtsrichtung des Fahrzeugs erstreckt;
einen Aufnahmedurchgang (29), der sich von einer Hinterseite des Fahrzeugs über den Zylinderbereich (2A) zu einer Vorderseite des Fahrzeugs erstreckt und mit dem Zylinderbereich (2A) verbunden ist;
eine Drosselklappe (24), die in dem Aufnahmedurchgang (29) bereitgestellt ist, den Zylinderbereich (2A) in einer Draufsicht überlagert und eine Menge von Ansaugluft, die durch den Aufnahmedurchgang (29) strömt, reguliert;
ein Motorelement, wobei das Motorelement ein Kettenspanner (33) zum Einstellen einer Spannung einer Zeitsteuerungskette in dem Motor (2) ist, das auf einer Oberseite des Zylinderbereichs (2A) angeordnet ist und einen nach oben vorstehenden Bereich aufweist;
einen Drosselmotor (26), der die Drosselklappe (24) antreibt und oberhalb des Motors (2) und unterhalb des Aufnahmedurchgangs (29) angeordnet ist;
einen Drehzahlverminderungsmechanismus (27), der auf einer Seite des Aufnahmedurchgangs (29) in einer Fahrzeugbreitenrichtung angeordnet ist und zur Übertragung von Leistung den Drosselmotor (26) mit der Drosselklappe (24) verbindet; und
eine Sensoreinheit (25), die auf der anderen Seite des Aufnahmedurchgangs (29) in der Fahrzeugbreitenrichtung angeordnet ist und außerhalb des Drosselmotors (26) in der Fahrzeugbreitenrichtung angeordnet ist,
**dadurch gekennzeichnet, dass**:
ein Raum (25S) unterhalb der Sensoreinheit (25) und auf einer Lateralseite des Drosselmotors (26) in der Fahrzeugbreitenrichtung gebildet ist,
der Kettenspanner (33) in dem Raum (25S) angeordnet ist,
das Fahrzeug vom Satteltyp weiter ein Befestigungselement (33a) zum Befestigen des Kettenspanners (33) an der Oberseite des Zylinderbereichs (2A) einschließt; und dadurch, dass
zumindest ein Teil des Befestigungselements (33a) die Sensoreinheit (25) in einer Draufsicht überlagert; und
der Drosselmotor (26) so angeordnet ist, dass er eine Überlagerung des Kettenspanners (33) in einer Draufsicht vermeidet.

2. Fahrzeug vom Satteltyp nach Anspruch 1,
wobei die Sensoreinheit (25) zumindest einen Bereich des Kettenspanners (33) in einer Draufsicht überlagert, und
zumindest ein Bereich des Kettenspanners (33) den Drosselmotor (26) in einer Seitenansicht überlagert.

3. Fahrzeug vom Satteltyp nach Anspruch 1 oder 2,
wobei ein Drosselkörper (22) einen Drosselhauptkörper (22A), der die Drosselklappe (24), den Verminderungsmechanismus (27) und die Sensoreinheit (25) einschließt, und den Drosselmotor (26) einschließt,
wobei der Drosselhauptkörper (22A) so angeordnet ist, dass er einen am weitesten vorstehenden Bereich des Kettenspanners (33) in einer Draufsicht umgeht.

4. Fahrzeug vom Satteltyp nach einem der Ansprüche 1 bis 3,
wobei der Kettenspanner (33) einen Flanschbereich (33f) einschließt, der eine Erstreckung in einer Längsrichtung des Fahrzeugs aufweist, und
eine virtuelle gerade Linie, die sich in der Längsrichtung des Flanschbereichs erstreckt, die Achsenlinie des Drosselmotors innerhalb einer Breite in der Fahrzeugbreitenrichtung des Zylinderbereichs in einer Draufsicht schneidet, und weiter umfassend
eine Vielzahl von Befestigungselementen (33a) zum Befestigen des Flanschbereichs (33f) an der Oberseite des Zylinderbereichs (2A),
wobei zumindest ein Teil der Vielzahl von Befestigungselementen (33a) ein am weitesten vorstehender Bereich (33m) des Kettenspanners (33) ist.

5. Fahrzeug vom Satteltyp nach Anspruch 4,
wobei der Flanschbereich (33f) über zwei Befestigungselemente (33a) an die Oberseite des Zylinderbereichs (2A) gekoppelt ist,
eine Linie, die das Zentrum (P1) des Kettenspanners (33) durchläuft und zu der Mittelachse (C1) des sich in der Längsrichtung des Fahrzeugs erstreckenden Motors (2) parallel ist, in einer Draufsicht als eine virtuelle Mittellinie (L1) definiert ist, und
eine virtuelle gerade Linie (L1), die die zwei Befestigungselemente (33a) durchläuft, in einer Draufsicht einen spitzen Winkel bezüglich der virtuellen Mittellinie (L1) bildet.

## Revendications

1. Véhicule du type à enfourcher, comprenant :
un moteur (2) qui présente une partie formant cylindre (2A) s'étendant dans une direction vers l'avant du véhicule ;
un passage d'admission (29) qui s'étend depuis un côté arrière du véhicule jusqu'à un côté avant du véhicule sur la partie formant cylindre (2A) et est reliée à la partie formant cylindre (2A) ;
un papillon des gaz (24) qui est prévu dans le passage d'admission (29), chevauche la partie formant cylindre (2A) dans une vue en plan, et régule une quantité d'air d'admission s'écoulant à travers le passage d'admission (29) ;
un élément formant moteur, l'élément formant moteur étant un tendeur de chaîne (33) pour ajuster une tension d'une chaîne de distribution dans le moteur (2), qui est disposé sur une surface supérieure de la partie formant cylindre (2A) et présente une partie saillante vers le haut ;
un moteur de papillon des gaz (26) qui entraîne le papillon des gaz (24) et est disposé au-dessus du moteur (2) et au-dessous du passage d'admission (29) ;
un mécanisme de réduction de vitesse (27) qui est disposé sur un côté du passage d'admission (29) dans une direction de largeur de véhicule et relie le moteur de papillon des gaz (26) au papillon des gaz (24) de manière à transmettre une force motrice ; et
une unité de détection (25) qui est disposée sur l'autre côté du passage d'admission (29) dans la direction de largeur de véhicule et est disposée à l'extérieur du moteur de papillon des gaz (26) dans la direction de largeur de véhicule,
**caractérisé en ce que** :
un espace (25S) est formé au-dessous de l'unité de détection (25) et sur un côté latéral du moteur de papillon des gaz (26) dans la direction de largeur de véhicule,
le tendeur de chaîne (33) est disposé dans l'espace (25S),
le véhicule du type à enfourcher inclut en outre un élément de fixation (33a) pour fixer le tendeur de chaîne (33) à la surface supérieure de la partie formant cylindre (2A) ; et **en ce que**
au moins une partie de l'élément de fixation (33a) chevauche l'unité de détection (25) dans une vue en plan ; et
le moteur de papillon des gaz (26) est disposé pour éviter de chevaucher le tendeur de chaîne (33) dans une vue en plan.

2. Véhicule du type à enfourcher selon la revendication 1,
dans lequel l'unité de détection (25) chevauche au moins une partie du tendeur de chaîne (33) dans une vue en plan, et
au moins une partie du tendeur de chaîne (33) chevauche le moteur de papillon des gaz (26) dans une vue latérale.

3. Véhicule du type à enfourcher selon la revendication 1 ou 2,
dans lequel un corps de papillon des gaz (22) inclut un corps principal de papillon des gaz (22A) incluant le papillon des gaz (24), le mécanisme de réduction (27) et l'unité de détection (25), et le moteur de papillon des gaz (26),
dans lequel le corps principal de papillon des gaz (22A) est disposé pour éviter une partie la plus saillante du tendeur de chaîne (33) dans une vue en plan.

4. Véhicule du type à enfourcher selon l'une quelconque des revendications 1 à 3,
dans lequel le tendeur de chaîne (33) inclut une partie formant bride (33f) présentant une extension dans une direction longitudinale du véhicule, et
une ligne droite virtuelle s'étendant dans la direction longitudinale de la partie formant bride est en intersection avec la ligne axiale du moteur de papillon des gaz à l'intérieur d'une largeur dans la direction de largeur de véhicule de la partie formant cylindre dans une vue en plan, et comprenant en outre
une pluralité d'éléments de fixation (33a) pour fixer la partie formant bride (33f) à la surface supérieure de la partie formant cylindre (2A),
dans lequel au moins une partie de la pluralité d'éléments de fixation (33a) est une partie la plus saillante (33m) du tendeur de chaîne (33).

5. Véhicule du type à enfourcher selon la revendication 4,
dans lequel la partie formant bride (33f) est couplée à la surface supérieure de la partie formant cylindre (2A) via deux éléments de fixation (33a),
une ligne qui passe à travers le centre (P1) du tendeur de chaîne (33) et est parallèle à l'axe central (C1) du moteur (2) s'étendant dans la direction longitudinale du véhicule est définie en tant qu'une ligne centrale virtuelle (L1) dans une vue en plan, et
une ligne droite virtuelle (L1) passant à travers les deux éléments de fixation (33a) forme un angle aigu avec la ligne centrale virtuelle (L1) dans une vue en plan.
